# EUROPEAN PATENT APPLICATION

(11) **EP 3 835 360 A1**
(43) Date of publication of application: **16.06.2021**
(21) Application number: 20155532.3
(22) Date of filing: 05.02.2020
(51) Int. Cl.: C08L 67/03, D01F 1/10, D01F 6/92, C08L 67/02

(54) **POLYESTER FILAMENTS WITH IMPROVED DYEABILITY**

(30) Priority: 10.12.2019 US 201962946134 P
(71) Applicant: Aladdin Manufacturing Corporation, Calhoun GA 30701 (US)
(72) Inventor: NORTH, Melissa, Calhoun, GA 30701 (US); BEASON, Wayne, Dalton, GA 30721 (US); CASCIO, Anthony, Calhoun, GA 30701 (US)
(74) Representative: Schacht, Benny Marcel Corneel

(57) **Abstract**

The present disclosure provides polyester filaments with improved dyeability and their use in fiber for various applications, in particular polyethylene terephthalate or polytrimethylene terephthalate filaments that can be used in carpets.

## Description

### FIELD OF THE INVENTION

This disclosure related to polyester filaments with improved dyeability that can be used in fiber applications, for example fabrics or carpeting.

### BACKGROUND

Carpets, rugs, and mats used in home or commercial applications are typically made from natural fibers (such as cotton or wool) or synthetic fibers (such as nylon, polyester, polyolefins, acrylics, rayon, and cellulose acetate). Synthetic fibers tend to be more favored in carpet manufacture as they are generally more commercially acceptable and can be used for a wider variety of applications.

Nylon is often used in carpet fiber since it is strong, easy to dye, and readily available. Nylon carpeting can be disadvantageous, however, as it generally requires various treatments in light of its susceptibility to developing static electric charges and its ease of staining. Carpets made from polyolefins, such as polypropylene, are very resistant to staining and are naturally antistatic; however, polypropylene is a more rigid and less resilient fiber and will not generally maintain its appearance or shape under prolonged or heavy use, or after repeated deformations.

Polyesters such a PET, PTT, and PBT are a favorable alternative to both nylon and polyolefins and are known to provide stain resistance and static resistance while also providing a "wool-like" feel with good physical performance. However, polyester fibers often must be dyed at high temperature and high pressure so that the dye can enter the polymeric matrix due to their high crystallinity and compact structure. This is particularly problematic when attempting to get deeper and darker dye shades in the polyester fiber. Therefore, there is a clear need for improved polyester filament compositions with increased dyeability.

### SUMMARY OF THE INVENTION

The present disclosure describes improved polyester filaments with an increased ability to be dyed with deeper and darker shades under much milder conditions. In particular, it has been found that the use of a combination of a polybutylene terephthalate (PBT) and an ester modifier additive as described herein in the manufacture of polyethylene terephthalate (PET) or polytrimethylene terephthalate (PTT) filaments can lead to a synergistic improvement of the dyeability of these polyester fibers than when either of these additives are used alone or not at all.

Thus, in one aspect, a polyester filament is provided formed from a polymer mixture, the polymer mixture comprising at least 50 wt. % of a first polymer selected from polytrimethylene terephthalate (PTT) or polyethylene terephthalate (PET), or a combination thereof, based on the total weight of a polymer mixture; polybutylene terephthalate (PBT); and an ester modifier which increases the dye uptake of the polymer mixture.

In some embodiments, an increase in dye uptake is defined by an increase in color strength for the polymer filament, for example as measured by colorimetry, of 20% or greater as compared to the color strength measured for a control polymer filament that comprises the first polymer and does not include PBT and the ester modifier, when both the polymer filament and the control polymer filament are exposed to the same dyeing conditions.

In some embodiments, the ester modifier includes a copolymer formed by polymerization of a mixture comprising terephthalic acid or esters thereof, at least one dicarboxylic acid monomer, and at least one diol monomer. In some embodiments, the mixture includes terephthalic acid. In some embodiments, the dicarboxylic acid monomer includes adipic acid. In some embodiments, the diol monomer includes 1,4-butanediol. In some embodiments, the ester modifier includes polybutylene adipate terephthalate (PBAT).

In other embodiments, the ester modifier includes a copolymer formed by polymerization of a mixture comprising terephthalic acid or esters thereof, at least one diol monomer, and at least one polyalkylene glycol. In some embodiments, the mixture includes terephthalic acid. In some embodiments, the diol includes 1,4-butane diol. In some embodiments, the polyalkylene glycol includes polyethylene glycol having a molecular weight from 200 to 5000 g/mol. In some embodiments, the mixture further comprises sodium dimethyl-5-sulfoisophthalate (DMSIP), 5-sulfoisophthalic acid (SIPA), or combinations thereof.

In other embodiments, a polyester filament is provided formed from a polymer mixture, the polymer mixture comprising at least 50 wt. % of a first polymer selected from polytrimethylene terephthalate (PTT) or polyethylene terephthalate (PET), or a combination thereof, based on the total weight of a polymer mixture; polybutylene terephthalate (PBT); and an ester modifier selected from ortho-phthalic acid, isophthalic acid, or esters thereof.

In some embodiments, the ester modifier is present in the polymer mixture in a range of from 2.5 wt. % to 12 wt. % based on the total weight of the polymer mixture. In some embodiments, the ester modifier is present in an amount of 6 wt. % based on the total weight of the polymer mixture.

In some embodiments, the first polymer includes polytrimethylene terephthalate (PTT). In other embodiments, the first polymer includes polyethylene terephthalate (PET). In some embodiments, the first polymer includes a mixture of PTT and PET. In some embodiments, the first polymer is present in an amount of at least 50 wt. %, at least 60 wt. %, at least 70 wt. %, at least 80 wt. %, at least 90 wt. %, or at least 95 wt.% based on the total weight of the polymer mixture.

In some embodiments, the ratio of the wt. % of PBT to the wt. % of the ester modifier is in the range of from 0.5 to 1.5, for example 1.0, wherein the wt. % is based on the total weight of the polymer mixture.

The present disclosure includes a method of producing a polymer filament, comprising preparing the polymer mixture and forming a polymer filament from the polymer mixture. In addition, the present disclosure includes a method of increasing the dyeability of a polymer filament comprising at least 50% of a first polymer comprising polytrimethylene terephthalate (PTT) or polyethylene terephthalate (PET), the method comprising adding polybutylene terephthalate (PBT) and an ester modifier that increases the dye uptake of the polymer mixture to a polymer mixture comprising the first polymer and forming the polymer filament from the polymer mixture. The present disclosure further includes use of polybutylene terephthalate (PBT) and an ester modifier to increase the dyeability of a polymer filament comprising at least 50% of a first polymer comprising polytrimethylene terephthalate (PTT) or polyethylene terephthalate (PET).

The details of one or more embodiments are set forth in the descriptions below. Other features, objects, and advantages will be apparent from the description and from the claims.

### DETAILED DESCRIPTION OF THE INVENTION

Before the present methods and systems are disclosed and described, it is to be understood that the methods and systems are not limited to specific synthetic methods, specific components, or to particular compositions. It is also to be understood that the terminology used herein is for the purpose of describing particular embodiments only and is not intended to be limiting.

As used in the specification and the appended claims, the singular forms "a," "an" and "the" include plural referents unless the context clearly dictates otherwise. Ranges may be expressed herein as from "about" one particular value, and/or to "about" another particular value. When such a range is expressed, another embodiment includes¬ from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other additives, components, integers or steps. "Exemplary" means "an example of' and is not intended to convey an indication of a preferred or ideal embodiment. "Such as" is not used in a restrictive sense, but for explanatory purposes.

Disclosed are components that can be used to perform the disclosed methods and systems. These and other components are disclosed herein, and it is understood that when combinations, subsets, interactions, groups, etc. of these components are disclosed that while specific reference of each various individual and collective combinations and permutation of these may not be explicitly disclosed, each is specifically contemplated and described herein, for all methods and systems. This applies to all aspects of this application including, but not limited to, steps in disclosed methods. Thus, if there are a variety of additional steps that can be performed it is understood that each of these additional steps can be performed with any specific embodiment or combination of embodiments of the disclosed methods.

In one aspect, a polymer filament is provided formed from a polymer mixture comprising at least 50 wt. % of a first polymer selected from polytrimethylene terephthalate (PTT) and polyethylene terephthalate (PET), or combination thereof, based on the total weight of the polymer mixture; polybutylene terephthalate (PBT); and an ester modifier which increases the dye uptake of the polymer mixture.

Although not wishing to be bound by theory, it is believed that the ester modifiers chemically modify the polymer mixture such that the resulting polymer material has decreased crystallinity due to lowering the glass transition temperature (T_{g}) of the material. It is also believed that the PBT also has the effect of decreasing crystallinity due to lower the T_{g} of the material. This decrease in crystallinity provides more space for the dye to penetrate the polymer matrix formed in the polymer mixture, resulting in an increase in dye uptake of the polymer mixture. In some embodiments, it has been found that the combination of the ester modifier and the PBT has a synergistic effect on the dyeability of the polymer material while still maintaining the strength of the polymer material.

In some embodiments, an increase in dye uptake is defined by an increase in color strength for the polymer filament, as measured by colorimetry, of 20% or more as compared to the color strength measured for a control polymer filament that comprises the first polymer and does not include PBT and the ester modifier, when the polymer filament and the control polymer filament are exposed to the same dyeing conditions. In some embodiments, the polymer filament shows a 20% or greater, 40% or greater, 60% or greater, 80% or greater, 100% or greater, 150% or greater, 200% or greater, 250% or greater, 300% or greater, or 400% or greater increase in color strength, as measured by colorimetry, as compared to the control polymer filament when exposed to the same dyeing conditions.

"Color Strength" as used herein refers to the ability of a pigment or dye to change the color of an otherwise colorless material. Color strength may be measured, for example, by comparing the K/S value (where K represents the absorbance and S represents the scatter of the material) of a material, such as the polymer filaments described herein, to a known standard, for example the control polymer filament when exposed to the same dyeing conditions as the polymer filament as described herein. In some embodiments, the K/S value may be measured from the reflectance of the dyed material as determined by the Kubelka-Monk theory using the following formula: K/S = [{(1-R)²/2R}]. Thus, in some embodiments, the polymer filament as described herein shows an increase in its K/S value of 10% or greater as compared to the K/S value of the control polymer filament. In some embodiments, the polymer filament as described herein shows a 20% or greater, 40% or greater , 60% or greater, 80% or greater, 100% of greater, 150% or greater, 150% or greater, 200% or greater, 250% or greater, 300% or greater, or 400% or greater increase in its K/S value as compared to the K/S value of the control polymer filament. K/S values may be measured using any number of commercially available spectrophotometers, for example the Datacolor® 800 spectrophotometer.

In some embodiments, the ester modifier comprises a copolymer formed by polymerization of a mixture comprising terephthalic acid or esters thereof, at least one dicarboxylic acid monomer, and at least one diol monomer. In other embodiments, the ester modifier comprises a copolymer formed by polymerization of a mixture comprising terephthalic acid or esters thereof, at least one diol monomer, and at least one polyalkylene glycol. In one embodiment, the mixture comprises terephthalic acid or an ester thereof, a diol monomer, and a dicarboxylic acid monomer in a ratio of 1:2:1. In one embodiment, the mixture includes terephthalic acid. In one embodiment, the mixture includes dimethyl terephthalate.

In some embodiments, the at least one dicarboxylic acid monomer can be selected from an aliphatic and/or aromatic acid. In some embodiments, the at least one dicarboxylic acid monomer can be selected from isophthalic acid, 2,6-naphthalene dicarboxylic acid, 3,4'-diphenyl ether dicarboxylic acid, hexahydrophthalic acid, 2,7-naphthalenedicarboxylic acid, phthalic acid, 4,4'-methylenebis(benzoic acid), oxalic acid, malonic acid, succinic acid, methyl succinic acid, glutaric acid, adipic acid, 3-methyladipic acid, pimelic acid, suberic acid, azelaic acid, sebacic acid, 1,11-undecanedicarboxylic acid, 1,10-dodecanedicarboxylic acid, undecanedioic acid, 1,12-dodecanedicarboxylic acid, hexadecanedioic acid, docosanedioic acid, tetracosanedioic acid, 1,4-cyclohexanedicarboxylic acid, 1,3-cyclohexanedicarboxylic acid, 1,2-cyclohexanediacetic acid, fumaric acid, maleic acid, or combinations thereof. In some embodiments, the at least one dicarboxylic acid is selected from succinic acid, glutaric acid, adipic acid, sebacic acid, or combinations thereof. In one embodiment, the dicarboxylic acid monomer is adipic acid.

In some embodiments, the at least one diol monomer can be selected from an aliphatic diol, a cyclic diol, and/or an aromatic diol. In some embodiments, the at least one diol can be selected from monoethylene glycol, diethylene glycol, triethyleneglycol, poly(ethylene ether)glycols, 1,3-propanediol, 1,4-butanediol, poly(butylene ether)glycols, 1,6-hexanediol, 1,8-octanediol, 1,10-decanediol, 1,12-dodecanediol, 1,14-tetradecanediol, 1,16-hexadecanediol, and cis- or trans-1,4-cyclohexanedimethanol. In some embodiments, the diol is selected from ethylene glycol, 1,3-propanediol, and 1,4-butanediol. In other embodiments, the diol can be selected from 1,4-butanediol, 1,5-pentanediol, or 1,6-hexanediol. In one embodiment, the diol includes 1,4-butanediol.

In some embodiments, the polyalkylene glycol can be selected from the group consisting of polyethylene glycol, polypropylene glycol, ethylene oxide-propylene oxide copolymers, or combinations thereof. In some embodiments, the polyalkylene glycol includes polyethylene glycol. In some embodiments, the polyethylene glycol has a molecular weight from 200 to 5000 g/mol.

In some embodiments, the mixture further comprises sodium dimethyl-5-sulfoisophthalate (DMSIP), 5-sulfoisophthalic acid (SIPA), or combinations thereof. In some embodiments, the mixture includes dimethyl-5-sulfoisophthalate (DMSIP). In some embodiments, the mixture includes 5-sulfoisophthalic acid.

In some embodiments, the ester modifier comprises polybutylene adipate terephthalate (PBAT).

In some embodiments, the mixture further comprises a chain extender. In some embodiments, the chain extender can be selected from compounds comprising at least three functional groups capable of ester formation, such as alcohol functional groups, carboxylic acid functional groups, or carboxylic acid anhydride functional groups, for example but not limited to: tartaric acid, citric acid, malic acid, trimethylolpropane, trimethylolethane, pentaerythritol, polyether triols, glycerol, trimesic acid, trimellitic acid, trimellitic anhydride, pyromellitic acid, pyromellitic dianhydride and hydroxyisophthalic acid. In other embodiments, the chain extender is selected from compound comprising at least two isocyanate groups, for example but not limited to: aromatic isocyanates including tolylene 2,4-diisocyanate, tolylene 2,6-diisocyanate, 2,2'-diphenylmethane diisocyanate, 2,4'-diphenylmethane diisocyanate, 4,4'-diphenylmethane diisocyanate, naphthylene 1,5-diisocyanate, or xylylene diisocyanate; aliphatic diisocyanates such as 1,6-hexamethylene diisocyanate, isophorone diisocyanate, and methylenebis(4-isocyanatocyclohexane); trinuclear isocyanates such as tri(4-isocyanophenyl)methane; and isocyanurates derived from aliphatic isocyanates such as isophorone diisocyanate or methylenebis(4-isocyanatocyclohexane).

In another aspect, a polymer filament is provided formed from a polymer mixture comprising at least 50 wt. % of a first polymer selected from polytrimethylene terephthalate (PTT) or polyethylene terephthalate (PET), or a combination thereof, based on the total weight of a polymer mixture; polybutylene terephthalate (PBT); and an ester modifier selected from ortho-phthalic acid, isophthalic acid, or esters thereof.

In other embodiments, the ester modifier as used in the polymer mixture described herein may be selected from a phthalate plasticizer. Representative examples of phthalate plasticizers as can be used in the present invention include, but are not limited to, bis(2-ethylhexyl)phthalate (DEHP), bis(2-propylheptyl)phthalate (DPHP), diisononyl phthalate (DINP), di-n-butyl phthalate (DnBP), butyl benzyl phthalate (BBzP), diisodecyl phthalate (DIDP), dioctyl phthalate (DOP), diisooctyl phthalate (DIOP), diethyl phthalate (DEP), diisobutyl phthalate (DIBP), and di-n-hexyl phthalate.

In some embodiments, the ester modifier can be present in an amount ranging from 2.5 wt. % to 12 wt. %, from 3 wt. % to 10 wt. %, from 4 wt. % to 8 wt. %, from 5 wt. % to 7 wt. %, or from 5.5 wt. % to 6.5 wt. % based on the total weight of the polymer mixture. In some embodiments, the ester modifier can be present at 2.5 wt. %, 3 wt. %, 4 wt. %, 5 wt. %, 6 wt. %, 7 wt. %, 8 wt. %, 9 wt. %, 10 wt. %, 11 wt. %, or 12 wt. % based on the total weight of the polymer mixture. In one embodiment, the ester modifier is present at 6 wt. % based on the total weight of the polymer mixture.

In some embodiments, polybutylene terephthalate (PBT) can be present in an amount ranging from 2.5 wt. % to 12 wt. %, from 3 wt. % to 10 wt. %, from 4 wt. % to 9 wt. %, from 5 wt. % to 8 wt. %, from 6 wt. % to 8 wt. %, or from 7 wt. % to 8 wt. % based on the total weight of the polymer mixture. In some embodiments, PBT can be present at 2.5 wt. %, 3 wt. %, 4 wt. %, 5 wt. %, 6 wt. %, 7 wt. %, 8 wt. %, 9 wt. %, 10 wt. %, 11 wt. %, or 12 wt. % based on the total weight of the polymer mixture. In one embodiment, PBT is present at 7.5 wt. % based on the total weight of the polymer mixture.

In some embodiments, the ratio of the wt. % of PBT to the wt. % of the ester modifier can be in the range of 0.5 to 1.5, from 0.6 to 1.4, from 0.7 to 1.3, from 0.8 to 1.2, from 0.9 to 1.1, or from 0.95 to 1.05, wherein the wt. % is based on the total weight of the polymer mixture. In some embodiments, the ratio of the wt. % of PBT to the wt. % of the ester modifier can be 0.5, 0.6, 0.7, 0.8, 0.9, 1.0, 1.1, 1.2, 1.3, 1.4, or 1.5, wherein the wt. % is based on the total weight of the polymer mixture. In one embodiment, the ratio of the wt. % of PBT to the wt. % of the ester modifier is 1.0, wherein the wt. % is based on the total weight of the polymer mixture.

In some embodiments, the filament comprises polyethylene terephthalate (PET) present in an amount of at least 50 wt. %, at least 55 wt. %, at least 60 wt. %, at least 65 wt. %, at least 70 wt. %, at least 75 wt. %, at least 80 wt. %, at least 85 wt. %, at least 90 wt. %, or at least 95 wt. % based on the total weight of the polymer mixture. In some embodiments, PET can be present in an amount of 90 wt. %, 91 wt. %, 92 wt. %, 93 wt. %, 94 wt. %, or 95 wt. % based on the total weight of the polymer mixture.

In some embodiments, the filament comprises polytrimethylene terephthalate (PTT) present in an amount of at least 50 wt. %, at least 55 wt. %, at least 60 wt. %, at least 65 wt. %, at least 70 wt. %, at least 75 wt. %, at least 80 wt. %, at least 85 wt. %, at least 90 wt. %, or at least 95 wt. % based on the total weight of the polymer mixture. In some embodiments, PTT can be present in an amount of 90 wt. %, 91 wt. %, 92 wt. %, 93 wt. %, 94 wt. %, or 95 wt. % based on the total weight of the polymer mixture.

In some embodiments, the filament comprises a mixture of PET and PTT, wherein the ratio of PET:PTT is around 20:1, 18:1, 15:1, 13:1, 10:1, 9:1, 8:1, 7:1, 6:1, 5:1, 4:1, 3:1, 2:1, 1.5:1, or 1:1. In other embodiments, the filament comprises a mixture of PET to PTT, wherein the ratio of PET to PTT is around 1:1.5, 1:2, 1:3, 1:4, 1:5, 1:6, 1:7, 1:8, 1:9, 1:10, 1:13, 1:15, 1:18, or 1:20. In some embodiments, PET/PTT mixture can be present in an amount of at least 50wt. %, at least 55 wt. %, at least 60 wt. %, at least 65 wt. %, at least 70 wt. %, at least 75 wt. %, at least 80 wt. %, at least 85 wt. %, at least 90 wt. %, or at least 95 wt. % based on the total weight of the polymer mixture. In some embodiments, the PET/PTT mixture can be present in an amount of 90 wt. %, 91 wt. %, 92 wt. %, 93 wt. %, 94 wt. %, or 95 wt. % based on the total weight of the polymer mixture.

In some embodiments, the PET as used in the polymeric mixture can further comprise one or more additional monomeric or polymeric units. In one particular embodiment, the one or more additional monomeric units comprises cyclohexane dimethanol (CHDM), wherein a PET polymer including a percentage of CHDM may also be known as PETG. In some embodiments, the one or more additional units can comprise one or more isophthalic acids, including sulfonated isophthalic acids. In some embodiments, the one or more additional units can be selected from diethylene glycol, polyethylene glycol, butylene glycol, polystyrene, vinyltoluene, halostyrene, dihalostyrene, styrene-butadiene copolymers, styrene-acrylonitrile copolymers, styrene-acrylonitrile-butadiene copolymers, styrene-butadiene-styrene terpolymers, styreneisoprene copolymers, aromatic dicarboxylic acids such a 5-sodium sulfoisophthalic acid, aliphatic dicarboxylic acids such as adipic acid and itaconic acid, glutaric acid, azelaic acid, sebacic acid, and combinations thereof. In some embodiments, the one or more additional units can comprise branching agents such as trimesic acid, pyromellitic acid, trimethylolpropane, trimethylolethane, and pentaerythritol.

In some embodiments, the PTT as used in the polymeric mixture can further comprise one or more additional monomeric units. Representative examples of the additional monomeric units include 5-sodium sulfoisophthalic acid, 5-potassium sulfoisophthalic acid, 4-sodium sulfo-2,6-naphthalenedicarboxylate, tetramethylphosphonium-3,5-dicarboxybenzenesulfonate, tetrabutylphosphonium 3,5-dicarboxybenzenesulfonate, tributylmethylphosphonium 3,5-dicarboxybenzenesulfonate, tetrabutylphosphonium 2,6-dicarboxynaphthalene-4-sulfonate, tetramethylphosphonium 2,6-dicarboxynaphthalene-4-sulfonate, ammonium 3,5-dicarboxybenzenesulfonate, 1,2-butanediol, 1,3-butanediol, 1,4-butanediol, neopentyl glycol, 1,5-pentamethylene glycol, 1,6-hexamethylene glycol, heptamethylene glycol, octamethylene glycol, decamethylene glycol, dodecamethylene glycol, 1,4-cyclohexanediol, 1,3-cyclohexanediol, 1,2-cyclohexanediol, 1,4-cyclohexanedimethanol, 1,3-cyclohexanedimethanol, 1,2-cyclohexanedimethanol, oxalic acid, malonic acid, succinic acid, glutaric acid, adipic acid, heptanedioic acid, octanedioic acid, sebacic acid, dodecanedioic acid, 2-methylglutaric acid, 2-methyladipic acid, fumaric acid, maleic acid, itaconic acid, 1,4-cyclohexanedicarboxylic acid, 1,3-cyclohexanedicarboxylic acid, and 1,2-cyclohexanedicarboxylic acid.

In some embodiments, the polymer mixture further comprises additives in a range up to 20 wt. % based on the total weight of the polymer mixture. Representative examples of such additives include, but are not limited to: flame retardant additives, for example decabromodiphenyl ether and triaryl phosphates such as triphenyl phosphate; reinforcing agents such as glass fibers; thermal stabilizers, for example thermal conductivity improves such as zinc oxide and titanium oxide; ultraviolet light stabilizers such as resorcinol monobenzoates, phenyl salicyclate and 2-hydroxybenzophenones; hindered amine stabilizers such as benzotriazole, benzophenone, oxalanilide, and cerium oxide; impact modifiers; flow enhancing additives; ionomers; liquid crystal polymers; fluoropolymers; olefins including cyclic olefins; polyamides; ethylene vinyl acetate copolymers; stabilizing agents such as ortho-phosphoric acid, trimethyl phosphate, triphenylphosphate, and triethylphosphino acetate; delustering agents such as titanium oxide; carriers such as o-phenylphenol, p-phenylphenol, o-dichlorobenzene, trichlorobenzene, monochlorobenzene, biphenyl, methyl salicyclate, butyl benzoate, benzyl benzoate, benzoic acid, benzalacetone, and methyl cinnamate; leveling agents such as asbishydroxymethyloxazoline, diaryl ethers, ditolyl ether, sodium di-naphthylmethane-B,B disulfonate, ammonium dodecylbenzene sulfonate, sodium tetrapropylbenzene sulfonate, homopolymers or oligomers of N-vinyl pyrrolidone or poly tetrahydrofuran; and porosity additives such as metal oxalate complexes, organic sulfonate salts, jade powder, or zeolite powder.

In some embodiments, the present disclosure provides fibers, particularly carpet fibers, prepared from the filaments, as well as carpets prepared from the fibers. In other embodiments, the filaments may be used for various other applications including, but not limited to, fibers and yarns for apparel fabric, drapery, upholstery, wall coverings, heavy industrial fabrics, ropes, cords, shoe laces, and nettings. By "fibers", reference is made to items, recognized in the art as fibers, such as continuous filaments, monofilaments, staple fibers, and the like. The fibers can be round or have other shapes, such as octalobal, delta, sunburst (also known as sol), scalloped oval, trilobal, tetra-channel (also known as quatra-channel), kidney-shaped, scalloped ribbon, ribbon, starburst, and the like. The fibers may be solid, hollow, or multi-hollow. The fibers can be used to make yarns, and the fibers or yarns can be used to prepare a number of materials, particularly carpets, rugs, mats, and the like.

In some embodiments, the invention provides yarns prepared using the fibers described herein. The yarns may be prepared according to any method for preparing yarns recognized in the art as being useful therefore. For example, the yarn of the invention could be partially oriented yarn, spun drawn yarn, textured yarn, friction false-twisted yarn, and bulk continuous filament (BCF) yarn. Preferred steps in preparing BCF yarn include spinning (e.g., extruding, cooling, and collating filaments), single stage or multi-stage drawing (such as with heated rolls, heated pin or hot fluid assist) at a defined temperature and draw ratio, annealing, bulking, entangling, optionally relaxing, and winding the filaments on a package for subsequent use.

The fibers of the invention also be made into staple fibers of varying lengths. Such staple fibers can be used for a variety of products, including carpets.

In some embodiments, carpets, rugs, mats, and the like can be prepared using the fibers of the present disclosure. Any method of preparing a carpet from a fiber known in the art could be used in preparing carpets according to the invention. For example, BCF yarns are typically used to prepare all types of carpets, as well as textiles, and methods of preparing carpets from BCF yarn have been described. Typically, a number of yarns are cable twisted together and heat set in a device such as an autoclave, and then tufted into a primary backing. Latex adhesive and a secondary backing are then applied. Carpets according to the present disclosure can likewise be made from non-BCF yarns, such as spun yarns.

A number of embodiments of the disclosure have been described. Nevertheless, it will be understood that various modifications may be made without departing from the spirit and scope of the invention. Accordingly, other embodiments are within the scope of the following claims.

### EXAMPLES

The following examples are for the purpose of illustration of the invention only and are not intended to limit the scope of the present invention in any manner whatsoever.

### Example 1. Preparation ofPTT Blends

| | |
|---|---|
| Raw Materials: | PTTBRT Sorona Resin (PTT) |
| | EBABS3SMOD BASF 3S Modifier |
| | Valox 314 PBT |
| | Spin Pack: 150Y, #346 |
| | TP00204 PTT TiO₂ (target is 0.09, use Ti) |
| | Finish: PN-155 |

Yarns composed of the above raw materials were extruded using standard techniques to produce a 1500 denier product. All raw materials were dried before use in the extrusion process. The following PTT and PTT blend fibers in Table 1 were prepared from the above raw materials with the balance being PTT:

**Table 1. PTT/PBT Modified Fiber Blends Prepared**

| Sample | 3S Modifier (wt %) | PBT (wt %) | lbs |
|---|---|---|---|
| Control | 0 | 0 | 1 doff |
| 1 | 12 | 0 | 1 doff |
| 2 | 9 | 3.8 | 1 doff |
| 3 | 6 | 7.5 | 1 doff |
| 4 | 3 | 11.3 | 1 doff |
| 5 | 0 | 15 | 1 doff |

### Procedures for Measurement of Physical Properties of Fibers

Denier for each yarn prepared was measured using a denier wheel according to ASTM method D1907 'Standard Test Method for Linear Density of Yarn (Yarn Number) by Skein Method.' Elongation and Tenacity were measured using a Thwing Albert instrument according to ASTM method D2256 'Standard Test Method for Tensile Properties of Yarns by the Single-Strand Method.' Percent total recorder, percent crimp, and percent shrink was measured using a Lawson Hemphill textured yarn tester according to ASTM method D6774 'Standard Test Method for Crimp and Shrinkage Properties for Textured Yarns Using a Dynamic Textured Yarn Tester.' The percent finish on yarn was measured by nuclear magnetic resonance spectroscopy using a standard testing protocol.

**Table 2. Physical Properties**

| Sample | Denier | FOY | Tenacity | Elongation | TR | Crimp | Shrink | Entanglement |
|---|---|---|---|---|---|---|---|---|
| Control | 1463 | 1.731 | 1.866 | 72.537 | 15.10 | 12.82 | 2.62 | 25 |
| 1 | 1497 | 1.352 | 1.842 | 91.427 | 12.94 | 9.4 | 3.91 | 21 |
| 2 | 1506 | 1.312 | 2.013 | 95.427 | 12.50 | 9.3 | 3.53 | 17 |
| 3 | 1502 | 1.414 | 1.877 | 92.544 | 11.66 | 8.85 | 3.09 | 13 |
| 4 | 1513 | 1.376 | 1.777 | 96.603 | 12.85 | 8.96 | 4.27 | 21 |
| 5 | 1483 | 1.442 | 1.618 | 75.905 | 12.66 | 8.57 | 4.46 | 26 |

### Example 2. Dye Study of PTT Blends

### Color Strength Measurement Procedure for Dyed Fibers

Each of the yarns as produced in Example 1 were made into knitted sleeves using a knitting machine. Each knitted sleeve was composed of half of the control yarn and half of the test yarn.

The knitted sleeves were heat set prior to dyeing using a Superba heat set tunnel. A dye liquor was formed and each sleeve was dyed in a separate canister using the same dye liquor. The color strength of the below fibers dyed was determined by the K/S value as measured using a Datacolor 800 spectrophotometer. The color strength data was obtained and processed by Color IQC software. An average over three color strength readings was obtained for each sample. Each color strength value was normalized to a 100% color strength reading for 90% PTT/ 10% PET. The color strength measurements for each of the fibers formed is provided in Table 3 below.

**Table 3. Dye Study**

| | | % Strength | | | | |
|---|---|---|---|---|---|---|
| Sample | Description | 1 | 2 | 3 | Average | 100% PTT Control |
| Control | 100% PTT | 122.67 | 123.22 | 123.83 | 123.24 | 100.00 |
| 1 | 12% 3S Mod/0% PBT | 301.26 | 296.24 | 306.40 | 301.30 | 244.48 |
| 2 | 9% 3S Mod/3.8% PBT | 311.3 | 309.9 | 312.37 | 311.19 | 252.51 |
| 3 | 6% 3S Mod/7.5% PBT | 320.43 | 310.38 | 324.83 | 318.55 | 258.48 |
| 4 | 3% 3S Mod/11.3% PBT | 280.71 | 270.73 | 276.77 | 276.07 | 224.01 |
| 5 | 0% 3S Mod/15% PBT | 231.25 | 234.24 | 231.95 | 232.48 | 188.64 |

A yarn as formed in Sample 3 (6% 3S Modifier/7.5% PBT) was manufactured on production scale. The yarn produced was twisted and heat set and was then subsequently tufted into a carpet and coated according to standard manufacturing procedures. A visual inspection of the carpet showed it met requirements for uniformity of color.

The compositions and methods of the appended claims are not limited in scope by the specific compositions and methods described herein, which are intended as illustrations of a few aspects of the claims, and any compositions and methods that are functionally equivalent are intended to fall within the scope of the claims. Various modifications of the compositions and methods in addition to those shown and described herein are intended to fall within the scope of the appended claims. Further, while only certain representative compositions and method steps disclosed herein are specifically described, other combinations of the compositions and method steps also are intended to fall within the scope of the appended claims, even if not specifically recited. Thus, a combination of steps, elements, components, or constituents may be explicitly mentioned herein or less, however, other combinations of steps, elements, components, and constituents are included, even though not explicitly stated. The term "comprising" and variations thereof as used herein is used synonymously with the term "including" and variations thereof and are open, non-limiting terms. Although the terms "comprising" and "including" have been used herein to describe various embodiments, the terms "consisting essentially of' and "consisting" can be used in place of "comprising" and "including" to provide for more specific embodiments of the invention and are also disclosed. Other than in the examples, or where otherwise noted, all numbers expressing quantities of ingredients, reaction conditions, and so forth used in the specification and claims are to be understood at the very least, and not as an attempt to limit the application of the doctrine of equivalents to the scope of the claims, to be construed in light of the number of significant digits and ordinary rounding approaches.

## Claims

1. A filament formed from a polymer mixture comprising:
at least 50 wt. % of a first polymer selected from polytrimethylene terephthalate (PTT) and polyethylene terephthalate (PET), based on the total weight of the polymer mixture;
polybutylene terephthalate (PBT); and
an ester modifier that increases the dye uptake of the polymer mixture.

2. The filament of claim 1, wherein the filament shows an increase in color strength of 20% or greater as compared to the color strength for a control polymer filament that comprises the first polymer and does not include PBT or the ester modifier, when both the filament and the control polymer filament are exposed to the same dyeing conditions.

3. The filament of claim 2, wherein the color strength of the filament is 40% or greater, 60% or greater, 80% or greater, 100% or greater, 150% or greater, 200% or greater, 250% or greater, 300% or greater, or 400% or greater than the color strength of the control polymer filament.

4. The filament of any one of claims 1-3, wherein the ratio of the wt. % of PBT to the wt. % of the ester modifier is in the range of 0.5 to 1.5, wherein the wt. % is based on the total weight of the polymer mixture.

5. The filament of any one of claims 1-4, wherein PBT is present in a range of 2.5 wt. % to 12.5 wt. % based on the total weight of the polymer mixture.

6. The filament of any one of claims 1-5, wherein the ester modifier includes a copolymer formed by polymerization of a monomer mixture comprising terephthalic acid or esters thereof, at least one dicarboxylic acid monomer, and at least one diol monomer.

7. The filament of claim 6, wherein the dicarboxylic acid monomer is adipic acid.

8. The filament of claim 6 or 7, wherein the diol monomer is selected from ethylene glycol, 1,3-propanediol, and 1,4-butanediol.

9. The filament of any one of claims 6-8, wherein the diol monomer is 1,4-butanediol.

10. The filament of any one of claims 1-9, wherein the ester modifier includes polybutylene adipate terephthalate (PBAT).

11. The filament of any one of claims 1-5, wherein the ester modifier includes a copolymer formed by polymerization of a monomer mixture comprising terephthalic acid or esters thereof, at least one diol monomer, and at least one polyalkylene glycol.

12. The filament of claim 11, wherein the diol is selected from ethylene glycol, 1,3-propanediol, or 1,4-butanediol.

13. The filament of any one of claims 11-12, wherein the polyalkylene glycol is selected from polyethylene glycol, polypropylene glycol, ethylene oxide propylene oxide copolymers, or combinations thereof.

14. The filament of any one of claims 11-13, wherein the monomer mixture further comprises sodium dimethyl-5-sulfoisophthalate (DMSIP), 5-sulfoisophthalic acid (SIPA), or combinations thereof.

15. The filament of any one of claims 1-5, wherein the ester modifier includes ortho-phthalic acid or an ester thereof.

16. The filament of any one of claims 1-5, wherein the ester modifier includes isophthalic acid or an ester thereof.

17. The filament of any one of claims 1-16, wherein the ester modifier is present in a range of 2.5 wt. % to 12 wt. % based on the total weight of the polymer mixture.
